# EUROPEAN PATENT APPLICATION

(11) **EP 4 026 701 A1**
(43) Date of publication of application: **13.07.2022**
(21) Application number: 22150508.4
(22) Date of filing: 07.01.2022
(51) Int. Cl.: B41M 5/26, B23K 26/12, B44C 1/00

(54) **METAL COMPONENT DECORATING METHOD, METAL COMPONENT, AND WATCH COMPONENT**

(30) Priority: 07.01.2021 JP 2021001320
(71) Applicant: Seiko Epson Corporation, Tokyo 160-8801 (JP)
(72) Inventor: YOSHINAGA, Ai, Suwa-shi, 392-8502 (JP)
(74) Representative: Miller Sturt Kenyon

(57) **Abstract**

Provided is a decorating method for decorating a metal component by laser irradiation. The method includes performing laser irradiation while scanning, with a first element as a starting point, along a direction toward the metal component, and an oxide film is formed on the front surface of the metal component by the laser irradiation.

## Description

The present application is based on, and claims priority from JP Application Serial Number 2021-001320, filed January 7, 2021, the disclosure of which is hereby incorporated by reference herein in its entirety.

### BACKGROUND

### 1. Technical Field

The present disclosure relates to a metal component decorating method using laser processing, a metal component, and a watch component.

### 2. Related Art

In related art, technology for simultaneously cutting and coloring a metal component using laser processing is known. For example, JP-T-2015-514582 discloses a processing method for forming a groove in a metal watch component such as a crown, and coloring the bottom of the groove simultaneously by performing one cycle of laser processing.

However, with the processing method disclosed in JP-T-2015-514582, since the coloring is performed simultaneously with the cutting, there is a problem in that it is difficult to satisfy a need to perform only the coloring when desired.

### SUMMARY

A metal component decorating method according to the present application is a decorating method for decorating a metal component by laser irradiation. The method includes performing laser irradiation while scanning, with a first element as a starting point, from one end of the metal component in a vicinity of the first element toward another end of the metal component, and an oxide film is formed at a front surface of the metal component by the laser irradiation.

A metal component according to the present application is a metal component having a front surface decorated by laser irradiation, and the metal component includes an oxide film formed by a plurality of rounds of the laser irradiation with different overlap amounts of spots. The oxide film has a different thickness depending on a density of the overlap amount of the spots, and gradation due to interference of light is provided in accordance with the density.

A watch component according to the present application is a watch component having a front surface decorated by laser irradiation, and the watch component includes an oxide film formed by a plurality of rounds of the laser irradiation with different overlap amounts of spots. The oxide film has a different thickness depending on a density of the overlap amount of the spots, and gradation due to interference of light is provided in accordance with the density.

### BRIEF DESCRIPTION OF THE DRAWINGS

FIG. 1 illustrates a back face view of a watch according to a first embodiment.
FIG. 2 is an enlarged view of a section surrounded by a dotted line 7 in FIG. 1.
FIG. 3 is a flowchart illustrating a flow of a decorating method.
FIG. 4 is a schematic configuration diagram of a laser processing device.
FIG. 5 is a diagram illustrating an example of a scanning pattern.
FIG. 6 is an enlarged view of the vicinity of a scanning line L1 illustrated in FIG. 5.
FIG. 7 is a correlation table - 1 between scanning patterns and color tones.
FIG. 8 is a diagram illustrating an example of the scanning pattern.
FIG. 9 is a photomicrograph of a section surrounded by a dotted line 9 in FIG. 2.
FIG. 10 is a correlation table - 2 between scanning patterns and the color tones.
FIG. 11 is a diagram illustrating an example of a scanning pattern according to a second embodiment.

### DESCRIPTION OF EXEMPLARY EMBODIMENTS

### First Embodiment

### Overview of Watch

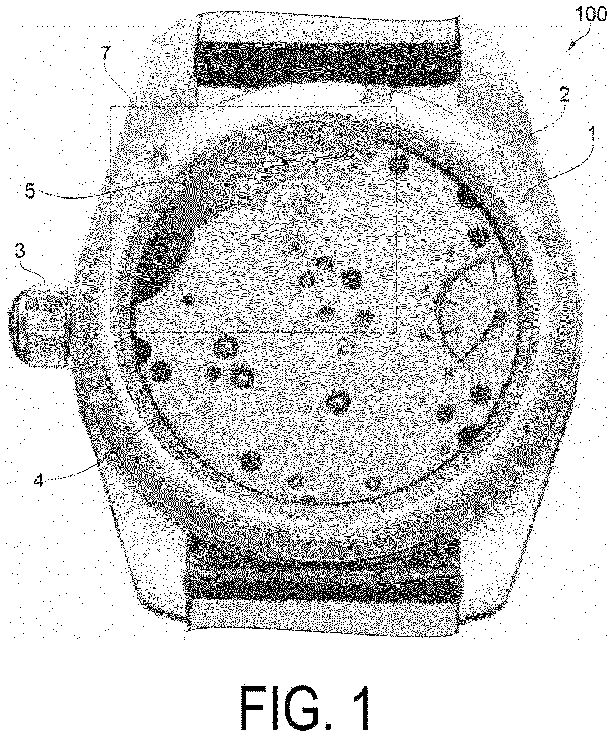

FIG. 1 is a back face view of a watch according to a first embodiment.

A watch 100 according to this embodiment is a three-hand analog wrist watch, and FIG. 1 is a plan view illustrating the back face of the watch 100. Note that the watch 100 is not limited to the analog watch, and may be, for example, a digital watch, a combination watch, a smart watch, or a health watch, as long as the watch is provided with a metal component.

The watch 100 is a so-called see-through back watch, and since a transparent case back 2 is attached to a case body 1, the watch 100 is configured so that an internal mechanism thereof can be observed.

The case body 1 is a case, and is formed of a hard metal such as titanium or stainless steel. The case body 1 is substantially circular, and the case back 2 is fitted with the inner circumference of a ring-shaped wall of the case body 1. Further, a crown 3 is provided on the side surface of the case body 1.

The case back 2 is formed of a transparent glass member, such as sapphire glass.

A movement (not illustrated) for driving the hands is housed inside the case body 1. In FIG. 1, a receiving plate 4 of the movement is observed via the case back 2. A plurality of bearings for toothed gears of the hands are provided in the receiving plate 4. Titanium is used for the material of the receiving plate 4, as a preferable example. Note that it is sufficient that the material of the receiving plate 4 be metal, and stainless steel or copper may be used, for example.

In a section surrounded by a dotted line 7 in FIG. 1, the receiving plate 4 includes a notch portion formed by cutting out a notch in the receiving plate 4. The notch portion is notched diagonally from a section near the crown 3 up to the 1 o'clock direction, and from the notch portion, an intermediate plate 5 is observed that is a metal component disposed in a layer below the receiving plate 4. The material of the intermediate plate 5 is the same as that of the receiving plate 4. The notch portion of the receiving plate 4 is provided to enhance the design of the watch 100, and the intermediate plate 5 disposed in the lower layer is observed while imparting a three-dimensional depth, from the notch portion.

### Decorating Mode of Metal Component

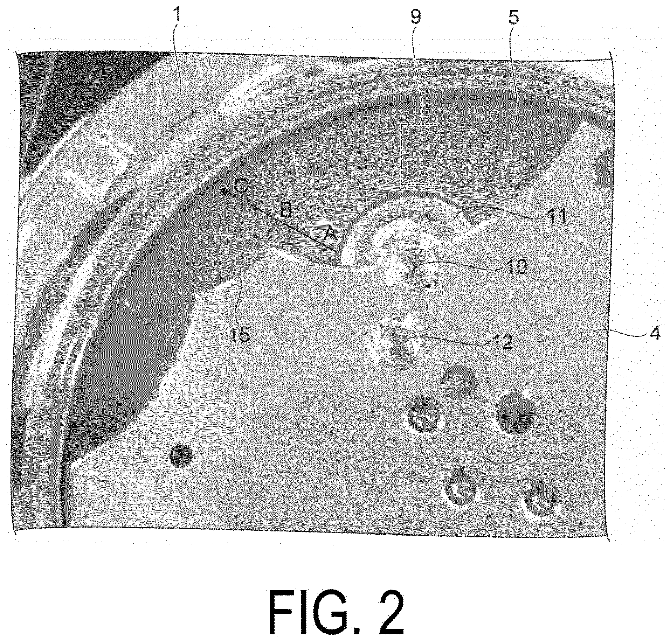

FIG. 2 is an enlarged view of the section surrounded by the dotted line 7 in FIG. 1.

As illustrated in FIG. 2, a bearing 10 is provided near the notch portion in the receiving plate 4. The bearing 10 is a bearing of a rotor 11, and a portion of the rotor 11 is exposed in an arc shape from the notch portion provided to the upper side of the bearing 10. Further, to the lower side of the bearing 10, a bearing 12 of a toothed gear coupled to the rotor 11 is provided.

A portion 15 designed to represent Mount Fuji is formed in the notch portion of the receiving plate 4. The rotor 11 having the arc-shape centered about the bearing 10 is disposed in a portion corresponding to the foot of the mountain-shaped portion 15. With these configurations, when the portion 15 is viewed as Mount Fuji, a scene is depicted as a design in which the sun represented by the rotor 11 is rising from the foot of Mount Fuji. Then, the intermediate plate 5, which is the background of the portion 15 that represents Mount Fuji, is designed to represent the sky, and the arc-shaped inner wall of the case body 1 creates an image of the sky. Note that the rotor 11 corresponds to a first element, and the portion 15 corresponds to a second element.

Here, the intermediate plate 5 that represents the sky is subjected to coloring processing by a decorating method using laser irradiation according to this embodiment. Specifically, as indicated by an arrow in FIG. 2, the intermediate plate 5 is subjected to coloring processing that causes the color tone to change continuously in a stepwise manner in order of a color tone A, a color tone B, and a color tone C, from the rotor 11 in a direction toward a top portion of the portion 15. In a preferable example, the color tone A is light blue, the color tone B is turquoise, and the color tone C is bluish purple, and these color tones represent a clear sky in the early morning. In other words, the clear sky in the early morning just before sun rise is reproduced by the gradation colors.

### Decorating Method by Laser Irradiation - 1

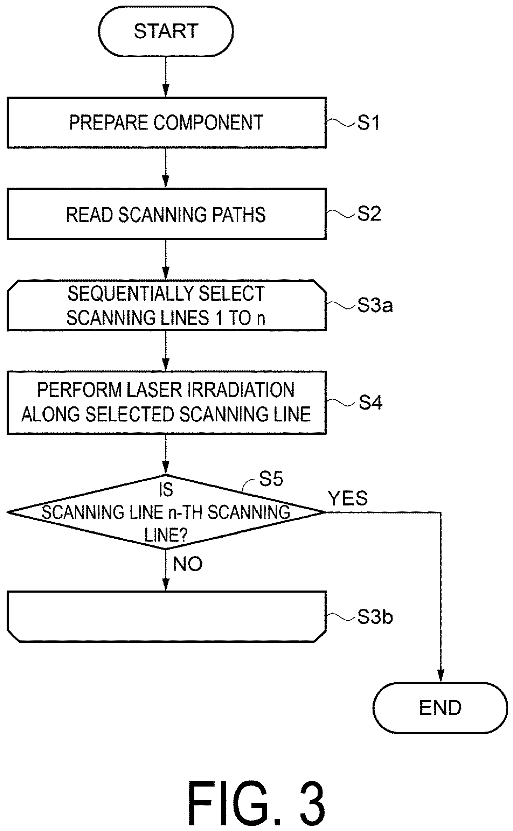

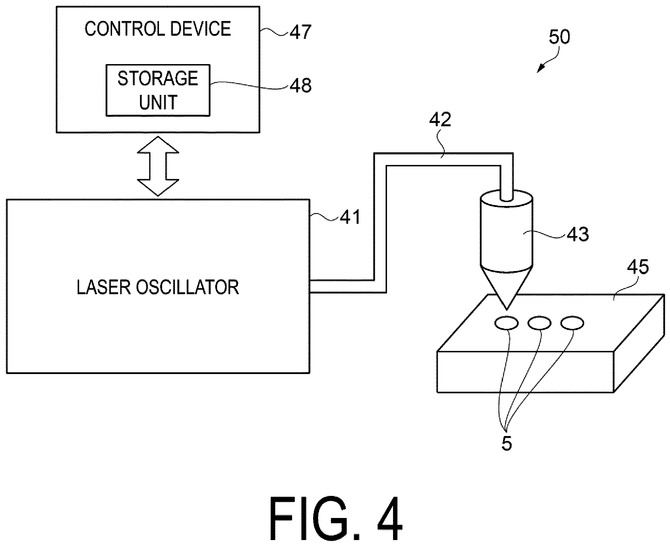

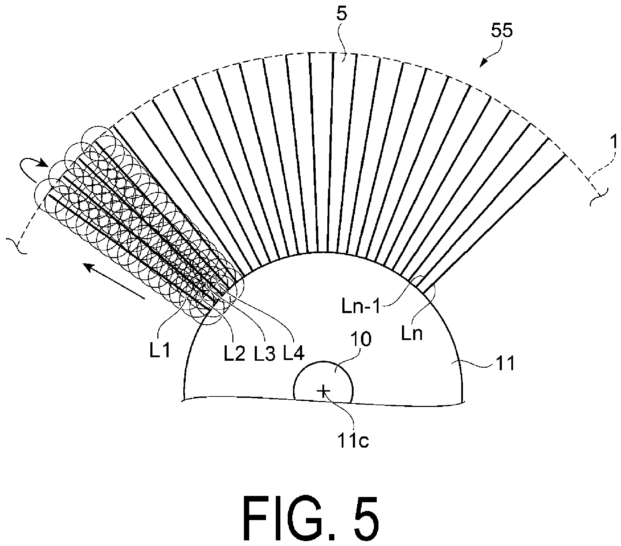

FIG. 3 is a flowchart diagram illustrating a flow of the decorating method. FIG. 4 is a schematic configuration diagram of a laser processing device. FIG. 5 is a diagram illustrating an example of a scanning pattern.

Here, the decorating method using the laser irradiation will be described mainly with reference to FIG. 3, and with occasional reference to FIG. 4 and FIG. 5 as appropriate.

At step S1, preparations for decorating processing are made. First, an operator sets the intermediate plate 5, which is a processing target object, on a processing table 45 of a laser processing device 50 illustrated in FIG. 4. Note that in parallel with the setting of the intermediate plate 5, the operator performs a setting operation for performing coloring processing on the intermediate plate 5, using a control device 47 of the laser processing device 50.

Since the laser processing device 50 is mainly operated at step S2 and subsequent steps, first, an overall configuration of the laser processing device 50 will be described with reference to FIG. 4.

The laser processing device 50 is configured by a laser oscillator 41, a transmission optical system 42, an irradiation unit 43, the processing table 45, the control device 47, and the like.

The laser oscillator 41 uses a CO₂ laser as a preferable example, and generates a nanosecond pulse laser beam in an infrared region. Note that a YAG (Yttrium Aluminum Garnet) laser or a fiber laser may also be used.

The transmission optical system 42 is an optical path for transmitting the laser beam generated by the laser oscillator 41 to the irradiation unit 43, and is configured by including a plurality of reflection mirrors.

The irradiation unit 43 is an irradiation nozzle that condenses the laser beam and irradiates the target object to be processed with the laser beam, and is configured by including a condensing lens.

The processing table 45 is an XY table, and in accordance with an instruction from the control device 47, causes the processing target object placed thereon to move along the plane in accordance with a scanning path pattern of the laser irradiation.

The control device 47 is a controller of the laser processing device 50, and integrally controls operations of each unit. The control device 47 includes a storage unit 48, and the storage unit 48 stores a control program that controls operations of the laser processing device 50, and various types of data. The various types of data include a plurality of scanning pattern data for the laser irradiation, which are set in advance for each of the processing target objects.

FIG. 5 is a diagram illustrating an example of the scanning pattern, and illustrates a scanning path pattern applied when performing the coloring processing on the intermediate plate 5.

At step S2, the control device 47 reads, from the storage unit 48, the scanning path data for the laser irradiation for performing the coloring processing on the intermediate plate 5. Specifically, a scanning pattern 55 illustrated in FIG. 5 is read by the control device 47. The scanning pattern 55 is a scanning path in which a plurality of scanning lines are provided radially from a first center 11c of the rotor 11 toward the intermediate plate 5. Specifically, scanning lines L1 to Ln, the scanning line L1 being the first scanning line and the scanning line Ln being the n-th scanning line, are disposed radially from the outer periphery of the rotor 11 toward the case body 1, centered about the first center 11c.

Between step S3a and step S3b, step S4 and step S5 are repeatedly performed while sequentially selecting the scanning lines L1 to Ln in the scanning pattern 55 illustrated in FIG. 5 one at a time.

At step S4, the control device 47 selects the first scanning line L1 in the scanning pattern 55 in FIG. 5, and causes the irradiation unit 43 to perform the laser irradiation from the outer periphery of the rotor 11 toward the case body 1, as indicated by a plurality of circles in FIG. 5. In other words, taking the rotor 11 as a starting point, the laser irradiation is performed while scanning along the direction toward the intermediate plate 5. Note that tracing of the scanning line L1 is performed as a result of the processing table 45 moving along the plane in accordance with data of the scanning line L1, in a state in which the irradiation unit 43 is fixed. Upon completion of the irradiation of the scanning line L1, the processing proceeds to step S5.

At step S5, the control device 47 determines whether or not the scanning line on which the laser irradiation has been performed at step S4 is the last n-th scanning line Ln. When it is the scanning line Ln, the laser irradiation is terminated. When it is not the scanning line Ln, the processing returns to step S3a to select the next scanning line. Here, the description will be given assuming that the processing returns to step S3a to select the next scanning line.

Subsequently, the control device 47 selects the second scanning line L2, and here, performs the laser irradiation from the case body 1 side toward the outer periphery of the rotor 11. Note that the reason why the laser irradiation is not performed from the rotor 11 side is that the overall processing time can be shortened, since the end of the scanning line L2 on the case body 1 side is closer than the end of the scanning line L2 on the rotor 11 side. In other words, the control device 47 controls each of the units so as to scan the scanning line L1 to the scanning line Ln while following the shortest single line path. Upon completion of the irradiation of the scanning line L2, the processing proceeds to step S5.

The processing at step S5 is as described above, and is continued until the laser irradiation is performed on the last n-th scanning line Ln.

When the third scanning line L3 is selected, the laser irradiation is performed from the rotor 11 side toward the case body 1. This is because the end point of the laser irradiation in the scanning line L2 is the end on the rotor 11 side. In this manner, the laser irradiation is performed from the rotor 11 side for the odd-numbered scanning lines, and performed from the case body 1 side for the even-numbered scanning lines.

Then, when the scanning line determined at step S5 is the scanning line Ln, the control device 47 terminates the laser irradiation. Note that, although the description is given here assuming that the determination processing at step S5 is performed each time the single scanning line is scanned, the laser irradiation may be performed on the scanning line L1 to the scanning Ln in one pass, without performing the determination processing.

### Coloring Principle by Laser Irradiation

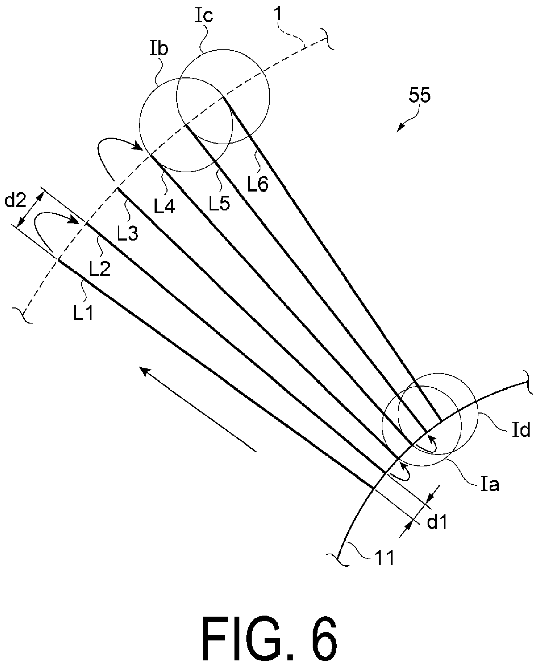

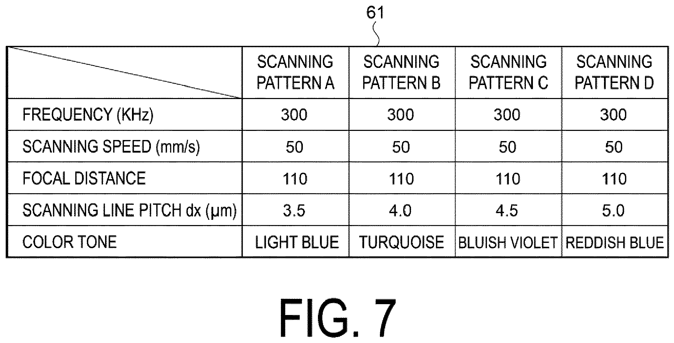

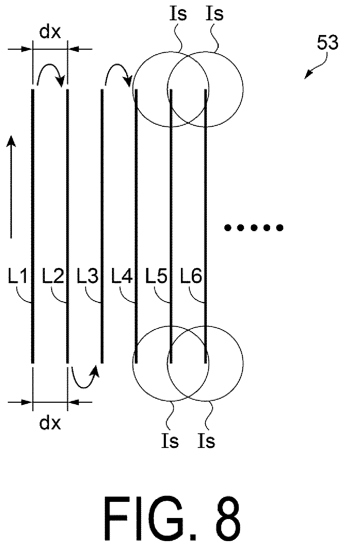

FIG. 6 is an enlarged view of the periphery of the scanning line L1 in FIG. 5. FIG. 7 is a list of irradiation conditions of the laser irradiation. FIG. 8 is a diagram illustrating an example of the scanning pattern.

Here, a coloring principle applied when performing coloring on the intermediate plate 5 by the decorating method using the above-described laser irradiation will be described mainly in reference to FIG. 6, and with occasional reference to FIG.7 and FIG 2 as appropriate.

As illustrated in FIG. 6, in the scanning pattern 55, a gap between the scanning line L1 and the scanning line L2 changes, the scanning line L1 and the scanning line L2 being adjacent to each other. Specifically, the gap between the two scanning lines is a dimension d1 at the end on the rotor 11 side, but is gradually widened to a dimension d2 at the end on the case body 1 side. In other words, an interval between the adjacent scanning lines changes, and gap dimensions at both ends are d1 < d2. In this way, by changing the interval between the adjacent scanning lines L1 and L2, the coloring processing can be performed that causes the color tone after the laser irradiation to change in a stepwise manner in order of the color tone A, the color tone B, and the color tone C from the rotor 11 in the direction toward the top portion of the portion 15, as illustrated in FIG. 2. Note that the intervals between the other adjacent scanning lines are also set to be the same dimensions.

A table 61 in FIG. 7 lists data obtained from test results carried out by the inventor and the like, and shows color tones to be used to decorate an irradiated portion when the laser irradiation is performed using a scanning pattern 53 constituted by parallel scanning lines illustrated in FIG. 8. Note that in the scanning pattern 53, the gap between the adjacent scanning lines L1 and L2 is constant at a dimension dx. Pitches between the other adjacent scanning lines are also set to be the same dimension. In other words, the scanning pattern 53 is a stripe-patterned scanning path constituted by the plurality of scanning lines arranged at equal intervals.

For example, in a scanning pattern A in FIG. 7, it is indicated that the color tone of the irradiated portion becomes light blue when the laser irradiation is performed using the scanning pattern 53 with the dimension dx between the adjacent scanning lines set to 3.5 µm, under irradiation conditions in which the frequency of the laser beam is 300 Khz, the irradiation scanning speed is 50mm/s, and the focal distance is 110mm. Note that the size of an irradiation spot Is of the laser irradiation is adjusted to be constant, and pulse irradiation is performed in accordance with the frequency of the laser beam. As illustrated in FIG. 8, the irradiation spot Is overlaps with the irradiation spot Is of the adjacent scanning line, and the overlap amount is substantially constant in the scanning pattern 53. Further, the output of the laser beam is preferably set conservatively to an extent that an oxide film can be formed on the front surface of the metal component. Note that the oxide film will be described below.

Similarly, in a scanning pattern B, the color tone of the irradiated portion becomes turquoise, when the laser irradiation is performed using the scanning pattern 53 with the dimension dx between the adjacent scanning lines set to 4.0 µm. Note that the frequency of the laser beam, the scanning speed, and the focal distance are the same as those of the scanning pattern A.

Similarly, in a scanning pattern C, the color tone of the irradiated portion becomes bluish purple, when the laser irradiation is performed using the scanning pattern 53 with the dimension dx between the adjacent scanning lines set to 4.5 µm. Note that the frequency of the laser beam, the scanning speed, and the focal distance are the same as those of the scanning pattern A.

Similarly, in a scanning pattern D, the color tone of the irradiated portion becomes reddish blue, when the laser irradiation is performed using the scanning pattern 53 with the dimension dx between the adjacent scanning lines set to 5.0 µm. Note that the frequency of the laser beam, the scanning speed, and the focal distance are the same as those of the scanning pattern A.

Now, the description returns to FIG. 6.

The scanning pattern 55 in FIG. 6 utilizes the above-described relationships, and the gap between the scanning lines L1 and L2 is set to 3.5 um of the scanning pattern A for the dimension d1 on the rotor 11 side, and is set to 4.5 µm of the scanning pattern C for the dimension d2 on the case body 1 side.

As a result, the coloring processing can be performed that causes the color tone to change in the stepwise manner in the order of light blue as the color tone A, turquoise as the color tone B, and bluish purple as the color tone C, from the rotor 11 in the direction toward the top portion of the portion 15, as illustrated in FIG. 2.

Further, as illustrated in FIG. 6, the laser irradiation is performed so that the irradiation spots overlap with each other between the adjacent scanning lines. The overlap amount of the irradiation spots on the rotor 11 side is approximately 70% or more between an irradiation spot la and an irradiation spot Id, and on the case body 1 side, is approximately 50% or more between an irradiation spot lb and an irradiation spot Ic . In other words, the overlap amount of the irradiation spots becomes larger the closer the irradiation spots are to the rotor 11, the rotor 11 being the first element. Further, the overlap amount between the irradiation spots lb and Ic at a portion furthest away from the rotor 11 is set to be approximately 50% or more. Note that each of the irradiation spots la, lb, Ic, and Id has the same size as the irradiation spot Is in FIG. 8.

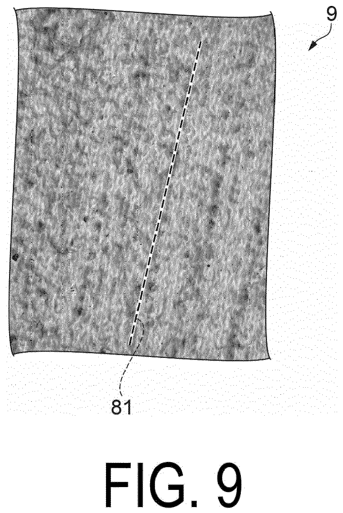

FIG. 9 is a photograph, taken by a laser microscope, of a section surrounded by a dotted line 9 in FIG. 2. Note that VK-X250^{®} was used as the laser microscope.

By performing the above-described laser irradiation, an oxide film is formed on the front surface of the intermediate plate 5. In FIG. 9, the oxide film is formed over the entire front surface. Portions observed as black spots are portions at which the film thickness of the oxide film is thin. Further, as indicated by a dotted line 81, it is understood that the black spot-like portions are formed along the scanning line. In other words, the intermediate plate 5 includes the oxide film that is formed by a plurality of rounds of the laser irradiation having the different overlap amounts of the irradiation spots, and thus, the thickness of the oxide film differs depending on the density of the overlap amounts of the irradiation spots. Then, in accordance with the thickness of the oxide film, gradation-like color tones due to the interference of light are exhibited.

Analysis concludes that color development in the laser-irradiated portion occurs as a result of a degree of the interference of light changing in accordance with the formation pattern and the thickness of the oxide film. By changing the laser irradiation conditions and the scanning pattern setting, the formation mode of the oxide film is changed, and it is thus possible to change the color tones.

### Different Coloring Modes

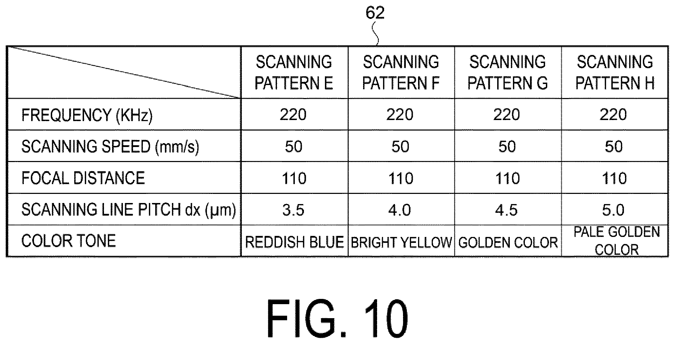

A table 62 in FIG. 10 is data obtained when the gap pitch between the scanning lines is caused to be different from that described above, and corresponds to FIG. 7.

In the table 62 in FIG. 10, for example, in a scanning pattern E, it is indicated that the color tone of the irradiated portion becomes reddish blue when the laser irradiation is performed using the scanning pattern 53 with the dimension dx between the adjacent scanning lines set to 3.5 µm, under the irradiation conditions in which the frequency of the laser beam is 220 Khz, the irradiation scanning speed is 50mm/s, and the focal distance is 110mm. In other words, a difference from the scanning pattern A in FIG. 7 is only that the frequency of the laser beam is 220 KHz. The other conditions are the same as those of the scanning pattern A, but it is understood that different coloring can be obtained by setting the frequency of the laser beam to 220 KHz.

Similarly, in a scanning pattern F, the same conditions as those of the scanning pattern B are applied except that the frequency of the laser beam is 220 KHz, and in this case, bright yellow coloring is obtained.

In a scanning pattern G, the same conditions as those of the scanning pattern C are applied except that the frequency of the laser beam is 220 KHz, and in this case, a golden color coloring is obtained.

In a scanning pattern H, the same conditions as those of the scanning pattern D are applied except that the frequency of the laser beam is 220 KHz, and in this case, a pale golden color coloring is obtained.

Note that FIG. 7 and FIG. 10 are examples, and the color tone can also be adjusted by changing the laser irradiation conditions, the scanning pattern setting, and the material of the object to be irradiated.

Further, in the description above, the laser processing device 50 has been described as the nanosecond pulse laser. This is because the nanosecond pulse laser is suitable for efficiently forming the oxide film. Specifically, when comparing the nanosecond pulse laser with a picosecond pulse laser and a femtosecond pulse laser, the nanosecond pulse laser has a higher energy per pulse than that of the other lasers. Thus, the nanosecond pulse laser can efficiently form the oxide film. However, by adjusting the laser irradiation conditions and the scanning pattern setting, the femtosecond pulse laser may also be used.

As described above, according to the decorating method of this embodiment and the metal component decorated using that decorating method, the following effects can be obtained.

According to the decorating method for the intermediate plate, that is, the metal component, according to this embodiment, as a result of taking the rotor 11, as the first element, as the starting point, and performing the laser irradiation while performing the scanning from the end of the scanning line in the vicinity of the rotor 11 toward the other end of the scanning line, on the intermediate plate 5, the oxide film can be formed on the front surface of the intermediate plate 5 by the laser irradiation.

According to this method, unlike known art in which the coloring is performed simultaneously with cutting, it is possible to only form the oxide film on the front surface of the metal component without performing the cutting.

Therefore, a metal component decorating method that satisfies a need to perform only the coloring when desired can be provided.

Further, the scanning by the laser irradiation is done along the plurality of scanning paths, and in the scanning pattern 55, the laser irradiation in the scanning paths adjacent to each other is performed so that the irradiation spots of the laser irradiation overlap with each other. The overlap amount of the irradiation spots is set to be larger the closer the irradiation spots are to the rotor 11.

According to this method, by varying the overlap amount of the irradiation spots and thereby changing the density of the irradiation amount, various decorations such as a gradation can be created, for example.

Further, in the scanning of the scanning pattern 55, the overlap amount between the irradiation spots lb and Ic at the portion furthest away from the rotor 11 is 50% or more.

According to this method, by varying the overlap amount of the irradiation spots and thereby changing the density or sparsity of the irradiation amount, various decorations such as a gradation can be created, for example.

Further, the laser irradiation is performed by the pulse irradiation in a constant cycle using the nanosecond laser.

For example, when comparing the nanosecond pulse laser with the picosecond pulse laser and the femtosecond pulse laser, the nanosecond pulse laser has a higher energy per pulse than that of the other lasers. Thus, the nanosecond pulse laser can efficiently form the oxide film.

Therefore, a metal component decorating method that can efficiently create various decorations can be provided.

Further, the scanning paths of the scanning pattern 55 are provided in a radial manner from the first center 11c of the rotor 11 toward the intermediate plate 5.

According to this method, a decoration with a radial gradation can be created.

The intermediate plate 5 according to this embodiment is the metal component with the front surface thereof decorated by the laser irradiation. The metal component includes the oxide film formed by the plurality of rounds of the laser irradiation having the different overlap amounts of the irradiation spots. The oxide film has the different thicknesses depending on the density of the overlap amount of the irradiation spots, and is provided with the gradation based on the density of the overlap amount, due to the interference of the light.

According to this configuration, a metal component on which various decorations are created can be provided.

### Second Embodiment

### Decorating Method by Laser Irradiation - 2

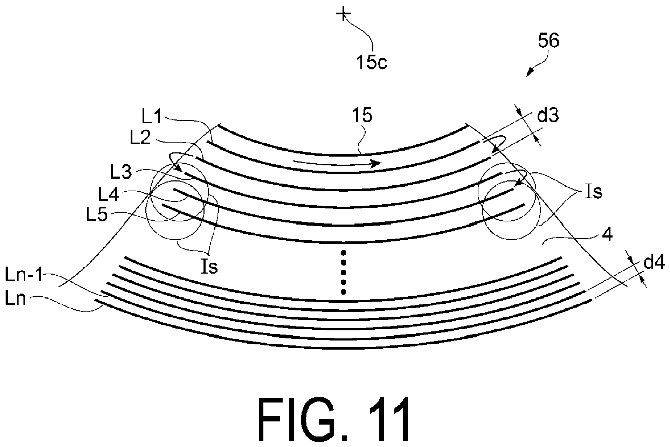

FIG. 11 is a diagram illustrating an example of the scanning pattern, and corresponds to FIG. 5.

Here, a decorating method by the laser irradiation according to a second embodiment will be described mainly with reference to FIG. 11, and with occasional reference to FIG. 10 and the like as appropriate. Note that the decorating method according to this embodiment is different from the decorating method according to the first embodiment only with respect to a scanning pattern 56 illustrated in FIG. 11. The flow of the decorating method is the same as that of the flowchart illustrated in FIG. 3, and the fact that the laser irradiation is performed using the laser processing device 50 illustrated in FIG. 4 is also the same as in the first embodiment. Below, the same constituent portions as those in the first embodiment are denoted by the same reference signs, and redundant descriptions of those constituent portions will be omitted.

The scanning pattern 56 illustrated in FIG. 11 is provided concentrically from a second center 15c of the portion 15, which represents Mount Fuji, toward the receiving plate 4, which is the metal component. Specifically, the scanning lines L1 to Ln, where the scanning line L1 is the first scanning line and the scanning line Ln is the n-th scanning line, are disposed concentrically from the top portion of the portion 15 toward the foot thereof, centered about the second center 15c.

Then, in the scanning pattern 56, the gap between the scanning lines adjacent to each other is constant, but the interval between the scanning lines gradually changes. For example, the gap between the scanning line L1 and the scanning line L2 is constant at a dimension d3, but the gap between the scanning line L2 and the scanning line L3 is constant at a dimension slightly narrower than the dimension d3. Similarly, the interval between the scanning lines gradually narrows, and the interval eventually becomes a dimension d4 between the scanning line Ln-1 and the scanning line Ln. In other words, the interval between the adjacent scanning lines is the dimension d3 on the top portion side of the portion 15, but gradually narrows down to the dimension d4 at the end on the foot side.

In the scanning pattern 56, the gap pitches of the scanning pattern E to the scanning pattern G in FIG. 10 are applied. Specifically, the dimension d4, which is the gap pitch between the scanning lines Ln and Ln-1 on the foot side of the portion 15, is set to 3.5 µm based on the scanning pattern E, and the dimension d3, which is the gap pitch on the top portion side of the portion 15, is set to 4.5 µm based on the scanning pattern G.

As a result, the coloring processing can be performed that causes the color tone to change in the stepwise manner in order of reddish blue as the color tone E, bright yellow as the color tone F, and the golden color as the color tone G, from the foot side to the top portion side of the portion 15, which represents Mount Fuji.

Then, in addition to the laser irradiation scanning on the intermediate plate 5 starting from the rotor 11, which is the first center, decoration based on the scanning pattern 56 according to this embodiment is performed. Specifically, a step is performed in which the laser irradiation is performed while performing scanning from the second center 15c of the portion 15, which represents Mount Fuji, along a direction toward the receiving plate 4, which is the metal component. Note that at this time, the laser scanning starting from the first center and the laser scanning centered about the second center do not overlap with each other, and, after editing the scanning pattern in advance so that the laser irradiation density does not become specific, the laser irradiation scanning is performed.

In this way, it is possible to create a decoration in which the portion 15 representing Mount Fuji whose peak is colored in gold emerges in a three-dimensional manner from the intermediate plate 5 representing a clear early morning sky just before sunrise.

Further, although it is described above that the scanning pattern 56 is provided concentrically from the second center 15c of the portion 15, which represents Mount Fuji, toward the receiving plate 4, the scanning pattern 56 may be replaced with the scanning pattern 55 and applied using the rotor 11, which is the first element, as the center. Specifically, the scanning pattern 56 may be provided concentrically from the first center 11c of the rotor 11 toward the intermediate plate 5. Even with the scanning pattern 56, the coloring processing can be performed that causes the color tone to change in the stepwise manner due to the density of the scanning lines.

Note that in the scanning pattern 56 also, the scanning lines L1 to Ln are selected so that the scanning path becomes the shortest single line path. Specifically, after the laser irradiation is performed from the left end to the right end of the scanning line L1, as indicated by an arrow, the laser irradiation is performed from the right end to the left end of the scanning line L2. Subsequently, as indicated by an arrow, the laser irradiation is performed from the left end to the right end of the scanning line L3. Thereafter, in a similar manner, the laser irradiation is performed while the scanning lines L4 to Ln are sequentially selected so as to obtain the shortest path.

Further, the first element and the second element, which are the starting points of the scanning pattern, are not limited to the rotor 11 and the portion 15, but each may be any portion as long as the portion is the center of a pattern to be formed. For example, a watch component such as a screw, a logo, a mark, a symbol, or the like may be the first element or the second element. Further, the watch component is not limited to those examples, and may be, for example, a balance wheel, a balance axle, a balance with hairspring, an escape wheel and pinion, a toothed gear, a shaft of a hand, a shaft of an oscillating weight, or the like.

Further, although it is described above that the receiving plate 4 and the intermediate plate 5, which are the metal components, are formed of titanium, the receiving plate 4 and the intermediate plate 5 are not limited thereto, and it is sufficient that the receiving plate 4 and the intermediate plate 5 be components formed of a metal. For example, the receiving plate 4 and the intermediate plate 5 may be formed of stainless steel, nickel silver, pure iron, brass, or duralumin, or may be formed of an alloy.

As described above, according to the decorating method of this embodiment, the following effects can be obtained in addition to the above-described effects of the first embodiment.

The scanning pattern 56 is provided concentrically from the second center 15c of the portion 15, which represents Mount Fuji, toward the receiving plate 4, which is the metal component.

According to this method, a decoration with a concentric gradation can be created.

Further, the portion 15 is provided as the second element, and the decoration based on the scanning pattern 56 according to this embodiment is performed in addition to the laser irradiation scanning on the intermediate plate 5 starting from the rotor 11, which is the first element according to the first embodiment. Specifically, a step is performed in which the laser irradiation is performed while performing the scanning from one end of the scanning line concentrically provided in the receiving plate 4, which is the metal component, toward the other end of the scanning line, centered about the second center 15c of the portion 15, which is the second element representing Mount Fuji.

In this way, it is possible to create a decoration in which the portion 15 representing Mount Fuji whose peak is colored in gold emerges in a three-dimensional manner from the intermediate plate 5 representing a clear early morning sky just before sunrise. In other words, by combining the two scanning patterns, more varied decorations can be created.

Further, the first element is one of the screw, the logo, the mark, the symbol, and the watch component.

According to this configuration, various decorations can be created with any one of the screw, logo, mark, symbol, and watch component as the starting point.

Further, the metal component is one of titanium, stainless steel, nickel silver, pure iron, brass, duralumin, and the alloy.

According to this configuration, various decorations can be created on any one of titanium, stainless steel, nickel silver, pure iron, brass, duralumin, and the alloy.

Note that although, in each of the above-described embodiments, it is described that the plurality of scanning lines are scanned following the shortest path as a preferable example, any scanning method may be applied as long as all the scanning lines can be scanned. For example, in the scanning pattern 55 in FIG. 5, the laser irradiation scanning may be performed on each of the scanning lines in one direction only from the rotor 11 side. Further, also in the scanning pattern 56 in FIG. 11, the laser irradiation scanning may be performed on all of the scanning lines in one direction only from the left end toward the right end of the portion 15. Even with such a scanning method, the same effects as in each of the above-described embodiments can be obtained.

Further, although, in the above-described embodiments, it is described that the gap between the adjacent scanning lines in the scanning pattern 56 is constant as a preferable example, the gap may be varied as in the scanning pattern 55. According to this configuration, more varied coloring processing can be performed. Further, although it is described above that the scanning line of the scanning pattern 56 is provided concentrically from the second center 15c of the portion 15 as a preferable example, the scanning line need not necessarily be formed to be a perfectly concentric circle, and may include a straight line portion. Even when the shape of the scanning line is not the perfectly concentric circle, it is sufficient that the irradiation spots overlap with each other when performing the laser irradiation on the adjacent scanning lines, and even with such a scanning pattern, the same effects as those of the above-described embodiments can be obtained.

Further, the laser irradiation conditions exemplified in each of the above-described embodiments, such as the frequency of the laser beam, the irradiation scanning speed, the focal distance, and the output, are each an example. The laser irradiation conditions are not limited to those values exemplified above. and may be adjusted and changed as appropriate in accordance with the material of the object to be irradiated, coloring specifications, the scanning pattern setting, and the like.

## Claims

1. A decorating method for decorating a metal component by laser irradiation, the method comprising:
performing laser irradiation while scanning, with a first element as a starting point, from one end of the metal component in a vicinity of the first element toward another end of the metal component, wherein
an oxide film is formed at a front surface of the metal component by the laser irradiation.

2. The metal component decorating method according to claim 1, wherein
the scanning is done along a plurality of scanning paths,
the laser irradiation in the scanning paths adjacent to each other is performed so that spots of the laser irradiation overlap with each other, and
an overlap amount of the spots is larger as the spots are closer to the first element.

3. The metal component decorating method according to claim 2, wherein
the overlap amount of the spots at a position, of the scanning, furthest from the first element is 50% or more.

4. The metal component decorating method according to claim 1, wherein
the laser irradiation is performed by pulse irradiation in a constant cycle using a nanosecond laser.

5. The metal component decorating method according to claim 2, wherein
the scanning path is provided radially from a first center of the first element toward the metal component.

6. The metal component decorating method according to claim 2, wherein
the scanning path is provided concentrically from a first center of the first element toward the metal component.

7. The metal component decorating method according to claim 1, wherein
the first element is any one of a screw, a logo, a mark, a symbol, and a watch component.

8. The metal component decorating method according to claim 1, wherein
the metal component is any one of titanium, stainless steel, nickel silver, pure iron, brass, duralumin, and an alloy.

9. The metal component decorating method according to claim 5, wherein
the metal component further includes a second element, and
in addition to the scanning with the first center as the starting point, the method comprises:
performing laser irradiation while scanning, with a second center of the second element as a starting point, from one end of the metal component in a vicinity of the second element toward another end of the metal component.

10. A metal component having a front surface decorated by laser irradiation, the metal component comprising:
an oxide film formed by a plurality of rounds of the laser irradiation with different overlap amounts of spots, wherein
the oxide film has a different thickness depending on a density of the overlap amount of the spots, and
gradation due to interference of light is provided in accordance with the density.

11. A watch component having a front surface decorated by laser irradiation, the watch component comprising:
an oxide film formed by a plurality of rounds of the laser irradiation with different overlap amounts of spots, wherein
the oxide film has a different thickness depending on a density of the overlap amount of the spots, and
gradation due to interference of light is provided in accordance with the density.
